# EUROPÄISCHE PATENTANMELDUNG

(11) **EP 4 140 624 A1**
(43) Veröffentlichungstag der Anmeldung: **01.03.2023**
(21) Anmeldenummer: 22191862.6
(22) Anmeldetag: 24.08.2022
(51) Int. Cl.: B23B 47/34

(54) **DREHWERKZEUG FÜR EINE SPANENDE BEARBEITUNG VON WERKSTÜCKEN**

(30) Priorität: 27.08.2021 DE 102021122256
(71) Anmelder: Gühring KG, 72458 Albstadt (DE)
(72) Erfinder: Bopp, Michael, 72479 Straßberg (DE); Helbig, Matthias, 72469 Meßstetten (DE)
(74) Vertreter: Gleim, Christian Ragnar

(57) **Zusammenfassung**

Drehwerkzeug 0 für eine spanende Bearbeitung von Werkstücken umfassend ein Spanwerkzeug 1 und ein Spanhäckselelement 2, wobei
- das Spanwerkzeug 1 entlang einer Drehachse A-A drehbar mit einem Endabschnitt 14 in einer Ausnehmung 24 des Spanhäckselelements 2 angeordnet ist; und wobei
- das Spanwerkzeug 1 zumindest eine Werkzeugschneide 11 und zumindest ein Spanleitelement 13 umfasst; und wobei
- das zumindest eine Spanleitelement 13 derart mit einem Eintrittsabschnitt 131 an der zumindest einen Werkzeugschneide 11 angeordnet ist, so dass Späne bei der Bearbeitung eines Werkstücks von der Werkzeugschneide 11 in den Eintrittsabschnitt 131 eintreten und zu einem Austrittsabschnitt 132 des Spanleitelements 13 geführt werden, um an dem Austrittsabschnitt 132 auszutreten; und wobei
- das Spanhäckselelement 2 zumindest eine Schneidkante 21 umfasst, welche derart ausgebildet ist, um sich, während einer Drehung des Spanwerkzeugs 1 relativ zu dem Spanhäckselelement 2, relativ zu dem Austrittsabschnitt 132 des zumindest einen Spanleitelements 13 zu bewegen, und um die an dem Austrittsabschnitt 132 austretenden Späne zu zerschneiden.

## Beschreibung

Die Erfindung betrifft ein Drehwerkzeug für eine spanende Bearbeitung von Werkstücken.

Drehwerkzeuge werden eingesetzt, um ein Material bei einem Werkstück spanend abzutragen. Dabei müssen die entstehenden Späne zuverlässig und schnell von dem Werkstück abgeführt werden, damit eine Beschädigung der Oberfläche des Werkstücks während der Bearbeitung verhindert wird.

Für die Spanabfuhr umfassen Drehwerkzeuge aus dem Stand der Technik Spanleitelemente, welche an der Werkzeugschneide angeordnet sind, und die Späne von der Oberfläche des zu bearbeitenden Werkstücks abführen sollen. Die Abführung der Späne erfolgt dabei beispielsweise alleine durch die während der Rotation des Drehwerkzeugs auftretenden, von dem Spanleitelement auf die Späne wirkenden, Radialkräfte. Diese Art der Abführung von Spänen ist ineffizient und es gelingt keine zuverlässige Abführung von Spänen weg von Oberfläche des Werkstücks.

Alternativ kann durch die Zuführung von Kühlmittel bei der Bearbeitung des Werkstücks der Span mit Hilfe des Kühlmitteldrucks von der Oberfläche des zu bearbeitenden Werkstücks abgeführt werden.

Vor allem bei der Bearbeitung von Werkstücken aus einem Material, welches zu langer Spanbildung neigt, beispielsweise niedrig siliziumhaltiges Aluminium, können die langen Späne nicht brechen und formen dadurch Spanknäuel. Diese Späne können dann nicht zuverlässig abgeführt werden.

Es ist die Aufgabe der vorliegenden Erfindung ein Drehwerkzeug für eine spanende Bearbeitung von Werkstücken bereitzustellen, welches die Nachteile aus dem Stand der Technik beseitigt und insbesondere eine zuverlässige Spanabfuhr gewährleistet, indem die bei der Bearbeitung eines Werkstücks entstehenden Späne zerschnitten werden. Diese Aufgabe wird durch den Gegenstand der Erfindung gemäß dem unabhängigen Anspruch gelöst.

Die Erfindung umfasst ein Drehwerkzeug für eine spanende Bearbeitung von Werkstücken umfassend ein Spanwerkzeug und ein Spanhäckselelement. Dabei ist das Spanwerkzeug entlang einer Drehachse drehbar mit einem Endabschnitt in einer Ausnehmung des Spanhäckselelements angeordnet. Das Spanwerkzeug umfasst zumindest eine Werkzeugschneide und zumindest ein Spanleitelement. Dabei ist das zumindest eine Spanleitelement derart mit einem Eintrittsabschnitt an der zumindest einen Werkzeugschneide angeordnet, sodass Späne bei der Bearbeitung eines Werkstücks von der Werkzeugschneide in den Eintrittsabschnitt eintreten und zu einem Austrittsabschnitt des Spanleitelements geführt werden, um an dem Austrittsabschnitt auszutreten. Das Spanhäckselelement umfasst zumindest eine Schneidkante, welche derart ausgebildet ist, um sich, während einer Drehung des Spanwerkzeugs relativ zu dem Spanhäckselelement, relativ zu dem Austrittsabschnitt des zumindest einen Spanleitelements zu bewegen, und um die an dem Austrittsabschnitt austretenden Späne zu zerschneiden.

Das Spanwerkzeug kann dabei einen zylinderförmigen Werkzeuggrundkörper aufweisen, an dessen Umfang die zumindest eine Werkzeugschneide angeordnet ist. Dabei kann die zumindest eine Werkzeugschneide radial und/oder axial zur Drehachse am Werkzeuggrundkörper vorstehen, um in Rotation ein Werkstück spanend zu bearbeiten.

Nach einem vorteilhaften Aspekt ist die zumindest eine Schneidkante jeweils an einem Außenumfang des Spanhäckselelements angeordnet. Dabei kann die zumindest eine Schneidkante jeweils in Richtung des Austrittsabschnitts des Spanleitelements vorstehen.

Nach einem weiteren vorteilhaften Aspekt weist das Spanhäckselelement einen kreisförmigen Außenumfang mit Radius R und einen zum Außenumfang konzentrisch angeordneten, kreisförmigen Innenumfang auf. Der Innenumfang umschließt die Ausnehmung zumindest teilweise. Dabei kann das Spanhäckselelement die Form eines Hohlzylinders aufweisen.

Nach einem besonders vorteilhaften Aspekt ist entlang des Außenumfangs des Spanhäckselelements regelmäßig im gleichen Bogenwinkelabstand B (in rad) in Bezug auf die Drehachse jeweils eine Schneidkante angeordnet.

Dabei ist der Bogenwinkelabstand B (in rad) bestimmt aus der Anzahl A der zumindest einen Schneidkante als B = 2 × π / A. Der Bogenwinkelabstand B (in rad) ist dabei in einem Bereich 0 < B ≤ 2×π.

Nach einem bevorzugten Aspekt umfasst das Spanhäckselelement eine Anzahl A der zumindest einen Schneidkante, sodass das Produkt R × B = R × 2 × π / A in einem Bereich zwischen 1 cm und 20 cm ist. Bevorzugt umfasst das Spanhäckselelement derart viele Schneidkanten, sodass das Produkt RxB = R × 2 × π / A in einem Bereich zwischen 2 cm und 10 cm ist.

Das Produkt R × B bestimmt dabei direkt die Schnittlänge L der austretenden Späne beim Zerschneiden durch die zumindest eine Schneidkante des Spanhäckselelements. Dabei ist eine Schnittlänge L zwischen 1 cm und 20 cm, bevorzugt zwischen 2 cm und 10 cm, besonders geeignet, um Werkstücke aus einem Material, welches zu langer Spanbildung neigt, zu bearbeiten. So werden die Späne derart kurz geschnitten, um keine Spanknäuel zu formen.

Nach einem weiteren bevorzugten Aspekt umfasst das Spanhäckselelement zwei bis zehn Schneidkanten, insbesondere fünf bis acht Schneidkanten.

Diese Anzahl von Schneidkanten ist besonders in Kombination mit einem Radius R in einem Bereich zwischen 3 cm bis 15 cm geeignet, Werkstücke aus einem Material, welches zu langer Spanbildung neigt, zu bearbeiten und die dabei entstehenden Späne derart kurz zu schneiden, damit sich keine Spanknäuel formen.

Nach einem besonders bevorzugten Aspekt ist an dem Austrittsabschnitt des zumindest ein Spanleitelement jeweils eine Abschlagschneidkante angeordnet. Die Abschlagschneidkante ist dabei derart ausgebildet, um mit der zumindest einen Schneidkante derart zusammenzuwirken, um während einer Drehung des Spanwerkzeugs relativ zu dem Spanhäckselelement, die an die jeweilige Abschlagschneidkante geführten Späne zu zerschneiden.

Nach einem vorteilhaften Aspekt ist die Abschlagschneidkante jeweils derart an dem Austrittsabschnitt des zumindest einen Spanleitelements angeordnet, sodass die bei der Bearbeitung eines Werkstücks am Austrittsabschnitt austretenden Späne an die jeweilige Abschlagschneidkante geführt werden.

Nach einem weiteren vorteilhaften Aspekt ist die Abschlagschneidkante jeweils derart an dem Austrittsabschnitt des zumindest einen Spanleitelement angeordnet, sodass sich die zumindest eine Schneidkante, während einer Drehung des Spanwerkzeugs relativ zu dem Spanhäckselelement, relativ zu der jeweiligen Abschlagschneidkante derartig beabstandet bewegt, um die an die jeweilige Abschlagschneidkante geführten Späne zu zerschneiden.

Nach einem besonders vorteilhaften Aspekt ist an dem Endabschnitt des Spanwerkzeugs eine Antriebsschnittstelle zum Drehantreiben des Spanwerkzeugs angeordnet. Die Antriebsschnittstelle kann dabei als Kupplung ausgebildet sein.

Die Erfindung umfasst weiterhin ein Mehrspindeldrehwerkzeug umfassend einen Mehrspindelkopf mit mehreren Drehspindeln und zumindest ein Drehwerkzeug wie oben beschrieben. Dabei ist das Drehwerkzeug derart an einer Drehspindel angeordnet, sodass das Spanwerkzeug zu einer Drehung entlang der Drehachse antreibbar ist.

Im Folgenden wird die Erfindung anhand von Zeichnungen näher erläutert.

Es zeigen:
- Fig. 1: Schematische Abbildung eines erfindungsgemäßen Drehwerkzeugs; und
- Fig. 2: Schnittansicht des erfindungsgemäßen Drehwerkzeugs aus Fig. 1.

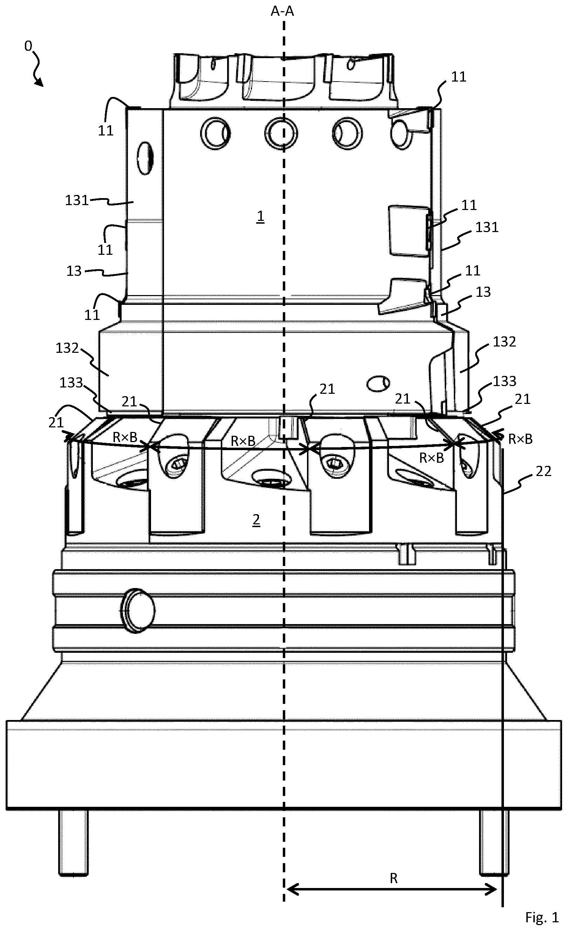

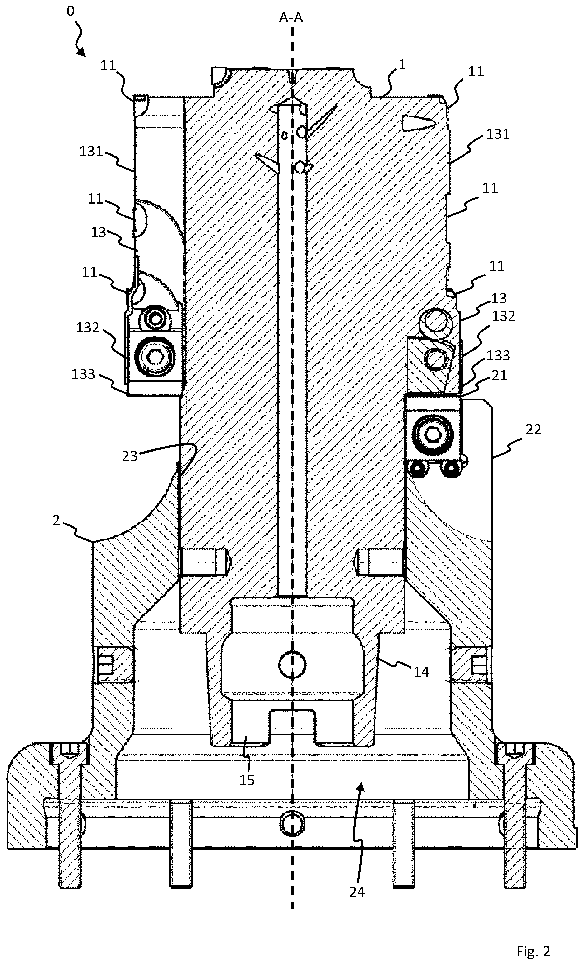

Im Folgenden wird die in Fig. 1 gezeigte schematische Abbildung eines erfindungsgemäßen Drehwerkzeugs 0 und dessen Schnittansicht in **Fig.** 2 zusammen beschrieben.

Das gezeigte Drehwerkzeug 0 ist für eine spanende Bearbeitung von Werkstücken geeignet. Es umfasst dabei ein Spanwerkzeug 1 und ein Spanhäckselelement 2. Dabei ist das Spanwerkzeug 1 entlang einer Drehachse A-A drehbar mit einem Endabschnitt 14 in einer Ausnehmung 24 des Spanhäckselelements 2 angeordnet. Dabei ist an dem Endabschnitt 14 des Spanwerkzeugs 1 eine Antriebsschnittstelle 15 zum Drehantreiben des Spanwerkzeugs 1 in Form einer Kupplung angeordnet.

Das Spanwerkzeug 1 weist einen zylinderförmigen Werkzeuggrundkörper auf, an dessen Umfang sechs radial zur Drehachse A-A am Werkzeuggrundkörper vorstehende Werkzeugschneiden 11 angeordnet sind.

Das Spanhäckselelements 2 weist die Form eines Hohlzylinders auf, wobei es einen kreisförmigen Außenumfang 22 mit Radius R und einen zum Außenumfang 22 konzentrisch angeordneten, kreisförmigen Innenumfang 23 aufweist.

Das gezeigte Spanwerkzeug 1 umfasst weiterhin zwei Spanleitelemente 13, wobei jeweils ein Spanleitelement 13 an drei axial angeordneten Werkzeugschneiden 11 angeordnet ist.

Dabei sind die Spanleitelemente 13 jeweils derart mit einem Eintrittsabschnitt 131 an den entsprechenden Werkzeugschneiden 11 angeordnet, sodass Späne bei der Bearbeitung eines Werkstücks von der jeweiligen Werkzeugschneide 11 in den jeweiligen Eintrittsabschnitt 131 eintreten und zu einem Austrittsabschnitt 132 des jeweiligen Spanleitelements 13 geführt werden, um an dem Austrittsabschnitt 132 auszutreten.

Das gezeigte Spanhäckselelement 2 umfasst acht Schneidkanten 21, von denen in der Fig. 1 vier zu sehen sind. Die restlichen Schneidkanten 21 befinden sich auf der Rückseite der gezeigten Ansicht.

Die Schneidkanten 21 sind derart ausgebildet, um sich, während einer Drehung des Spanwerkzeugs 1 relativ zu dem Spanhäckselelement 2, relativ zu dem jeweiligen Austrittsabschnitt 132 des jeweiligen Spanleitelements 13 zu bewegen, und um die an dem jeweiligen Austrittsabschnitt 132 austretenden Späne zu zerschneiden. Dabei sind die Schneidkanten 21 jeweils an dem Außenumfang 22 des Spanhäckselelements 2 angeordnet und stehen jeweils in Richtung des jeweiligen Austrittsabschnitts 132 des Spanleitelements 13 hervor.

Die Schneidkanten 21 sind entlang des Außenumfangs 22 des Spanhäckselelements 2 regelmäßig im gleichen Bogenwinkelabstand B (in rad) in Bezug auf die Drehachse A-A angeordnet. Dabei ist der Bogenwinkelabstand B (in rad) bestimmt aus der Anzahl A der Schneidkanten 21 als B = 2 × π / A. Der Bogenwinkelabstand B (in rad) ist dabei in einem Bereich 0 < B ≤ 2×π.

Die Anzahl A der Schneidkanten 21 ist so gewählt, dass das Produkt R × B = R × 2 × π / A in einem Bereich zwischen 1 cm und 20 cm ist. Bevorzugt kann die Anzahl A der Schneidkanten 21 so gewählt sein, sodass das Produkt R × B = R × 2 × π / A in einem Bereich zwischen 2 cm und 10c m ist. Dabei bestimmt das Produkt R × B direkt die Schnittlänge L der austretenden Späne beim Zerschneiden durch die Schneidkanten 21. Eine Schnittlänge L zwischen 1 cm und 20 cm, bevorzugt zwischen 2 cm und 10 cm, ist besonders geeignet, um Werkstücke aus einem Material, welches zu langer Spanbildung neigt, zu bearbeiten. So werden die Späne derart kurz geschnitten, um keine Spanknäuel zu formen. Dadurch können die Späne zuverlässig vom zu bearbeitenden Werkstück abgeführt werden.

An dem jeweiligen Austrittsabschnitt 132 des jeweiligen Spanleitelements 13 ist jeweils eine Abschlagschneidkante 133 angeordnet. Die Abschlagschneidkante 133 ist dabei jeweils derart an dem jeweiligen Austrittsabschnitt 132 angeordnet, sodass die bei der Bearbeitung eines Werkstücks am Austrittsabschnitt 132 austretenden Späne an die jeweilige Abschlagschneidkante 133 geführt werden.

Die Abschlagschneidkante 133 ist dabei jeweils derart an dem jeweiligen Austrittsabschnitt 132 angeordnet, sodass sich die Schneidkanten 21, während einer Drehung des Spanwerkzeugs 1 relativ zu dem Spanhäckselelement 2, relativ zu der jeweiligen Abschlagschneidkante 133 derartig beabstandet bewegt, um die an die jeweilige Abschlagschneidkante 133 geführten Späne zu zerschneiden bzw. abzuschlagen.

## Patentansprüche

1. Drehwerkzeug (0) für eine spanende Bearbeitung von Werkstücken umfassend ein Spanwerkzeug (1) und ein Spanhäckselelement (2), wobei
- das Spanwerkzeug (1) entlang einer Drehachse (A-A) drehbar mit einem Endabschnitt (14) in einer Ausnehmung (24) des Spanhäckselelements (2) angeordnet ist; und wobei
- das Spanwerkzeug (1) zumindest eine Werkzeugschneide (11) und zumindest ein Spanleitelement (13) umfasst; und wobei
- das zumindest eine Spanleitelement (13) derart mit einem Eintrittsabschnitt (131) an der zumindest einen Werkzeugschneide (11) angeordnet ist, so dass Späne bei der Bearbeitung eines Werkstücks von der Werkzeugschneide (11) in den Eintrittsabschnitt (131) eintreten und zu einem Austrittsabschnitt (132) des Spanleitelements (13) geführt werden, um an dem Austrittsabschnitt (132) auszutreten; und wobei
- das Spanhäckselelement (2) zumindest eine Schneidkante (21) umfasst, welche derart ausgebildet ist, um sich, während einer Drehung des Spanwerkzeugs (1) relativ zu dem Spanhäckselelement (2), relativ zu dem Austrittsabschnitt (132) des zumindest einen Spanleitelements (13) zu bewegen, und um die an dem Austrittsabschnitt (132) austretenden Späne zu zerschneiden.

2. Drehwerkzeug (0) nach Anspruch 1, wobei die zumindest eine Schneidkante (21) jeweils an einem Außenumfang (22) des Spanhäckselelements (2) angeordnet ist.

3. Drehwerkzeug (0) nach Anspruch 2, wobei das Spanhäckselelement (2) einen kreisförmigen Außenumfang (22) mit Radius R aufweist und einen zum Außenumfang (22) konzentrisch angeordneten, kreisförmigen Innenumfang (23) aufweist, welcher Innenumfang (23) die Ausnehmung (24) zumindest teilweise umschließt.

4. Drehwerkzeug (0) nach Anspruch 2 oder 3, wobei entlang des Außenumfangs (22) des Spanhäckselelements (2) regelmäßig im gleichen Bogenwinkelabstand B (in rad) in Bezug auf die Drehachse (A-A) jeweils eine Schneidkante (21) angeordnet ist.

5. Drehwerkzeug (0) nach Anspruch 4, wobei das Spanhäckselelement (2) eine Vielzahl von Schneidkanten (21) umfasst, sodass das Produkt RxB aus Radius R des Außenumfangs (22) und Bogenwinkelabstand B (in rad) zwischen zwei benachbarten Schneidkanten (21) in einem Bereich zwischen 1 cm und 20 cm ist, insbesondere in einem Bereich zwischen 2 cm und 10 cm.

6. Drehwerkzeug (0) nach einem der vorangehenden Ansprüche, wobei das Spanhäckselelement (2) zwei bis zehn Schneidkanten (21), insbesondere fünf bis acht Schneidkanten (21), umfasst.

7. Drehwerkzeug (0) nach einem der vorangehenden Ansprüche, wobei an dem Austrittsabschnitt (132) des zumindest einen Spanleitelements (13) jeweils eine Abschlagschneidkante (133) angeordnet ist.

8. Drehwerkzeug (0) nach Anspruch 7, wobei die Abschlagschneidkante (133) jeweils derart an dem Austrittsabschnitt (132) des zumindest einen Spanleitelements (13) angeordnet ist, sodass die bei der Bearbeitung eines Werkstücks am Austrittsabschnitt (132) austretenden Späne an die jeweilige Abschlagschneidkante (133) geführt werden.

9. Drehwerkzeug (0) nach Anspruch 7 und 8, wobei die Abschlagschneidkante (133) jeweils derart an dem Austrittsabschnitt (132) des zumindest einen Spanleitelement (13) angeordnet ist, sodass sich die zumindest eine Schneidkante (21), während einer Drehung des Spanwerkzeugs (1) relativ zu dem Spanhäckselelement (2), relativ zu der jeweiligen Abschlagschneidkante (133) derartig beabstandet bewegt, um die an die jeweilige Abschlagschneidkante (133) geführten Späne zu zerschneiden.

10. Drehwerkzeug (0) nach einem der vorangehenden Ansprüche, wobei an dem Endabschnitt (14) des Spanwerkzeugs (1) eine Antriebsschnittstelle (15) zum Drehantreiben des Spanwerkzeugs (1) angeordnet ist.

11. Mehrspindeldrehwerkzeug (10) umfassend einen Mehrspindelkopf (101) mit mehreren Drehspindeln (102) und zumindest ein Drehwerkzeug (0) nach einem der vorangehenden Ansprüche, welches Drehwerkzeug (0) derart an einer Drehspindel (102) angeordnet ist, sodass das Spanwerkzeug (1) zu einer Drehung entlang der Drehachse (A-A) antreibbar ist.
